# EUROPEAN PATENT SPECIFICATION

(11) **EP 2 335 865 B1**
(45) Date of publication and mention of the grant of the patent: **20.12.2023**
(21) Application number: 10196338.7
(22) Date of filing: 21.12.2010
(51) Int. Cl.: B23Q 1/54, B23Q 5/04

(54) **Toolholder head**
Werkzeughalterkopf
Tête de support d'outils

(30) Priority: 21.12.2009 IT MO20090299
(43) Date of publication of application: 22.06.2011
(73) Proprietor: Emmegi S.p.A., 41010 Limidi di Soliera (MO) (IT); HSD S.p.A., 61100 Pesaro (PU) (IT)
(72) Inventor: Bellucci, Marco, 6900 Paradiso (CH)
(74) Representative: Crugnola, Pietro

(56) References cited:
- EP-A1- 0 472 917
- WO-A1-2008/084489

## Description

The invention relates to a toolholder head. In particular, the invention relates to a toolholder head for a machine for machining elongated elements, in particular metal and/or plastic profiled sections, frames of fixtures, such as, for example, windows, french doors, doors, shutters, and the like.

Toolholder heads are known that are slidably supported by a frame of a machine tool for machining profiled sections, in particular aluminium profiled sections.

Such toolholder heads comprise a frame supporting a driving unit and a toolholder unit.

The driving unit comprises a motor connected to a tool to rotate the tool, the tool being rotatingly supported by a tool support included in the toolholder unit.

A drawback of known toolholder heads is that they are not very flexible.

In fact, for example in the event of breakage of the toolholder unit or if it is desired to use a toolholder unit provided with a different tool support, it is necessary to remove the toolholder head from the machine tool and replace the toolholder head with another toolholder head provided with an operating toolholder unit or with a toolholder unit including a desired tool support, respectively.

A further drawback of known toolholder heads are the long machine downtimes that are necessary to remove the toolholder heads in the event of breakage of the toolholder unit or if it is desired to use a toolholder unit provided with a different tool support.

An object of the invention is to improve toolholder heads, in particular the toolholder heads for machines for machining profiled sections, for example aluminium profiled sections.

A further object is to provide toolholder heads that are more flexible than known toolholder heads.

Another object is to obtain toolholder heads that enable production costs to be reduced compared with known toolholder heads.

The invention provides a toolholder head as defined in claim 1.

Owing to the invention it is possible to provide a toolholder head that is more flexible than known toolholder heads.

In fact, said quick joint connecting means enables said driving unit to be rapidly connected to/disconnected from said toolholder unit.

This enables said toolholder unit to be replaced rapidly in the event of breakage or if it is desired to replace said toolholder unit with another toolholder unit provided with a different tool support.

This also enables machine downtimes to be reduced if it is necessary to replace said toolholder unit.

In fact, in this case, it is no longer necessary to remove the entire toolholder head from said machine tool but it is sufficient to replace said toolholder unit.

The invention can be better understood and implemented with reference to the attached drawings that illustrate an embodiment thereof by way of non-limiting example, in which:
Figure 1 is a schematic perspective view of a toolholder head according to the invention in an assembled configuration;
Figure 2 is a schematic perspective view of the toolholder head in Figure 1 in a dismantled configuration;
Figure 3 is a cross section of a driving unit included in the toolholder head in Figure 1;
Figure 4 is a cross section of a toolholder unit included in the toolholder head in Figure 1;
Figure 5 is a further cross section of the toolholder unit in Figure 4.

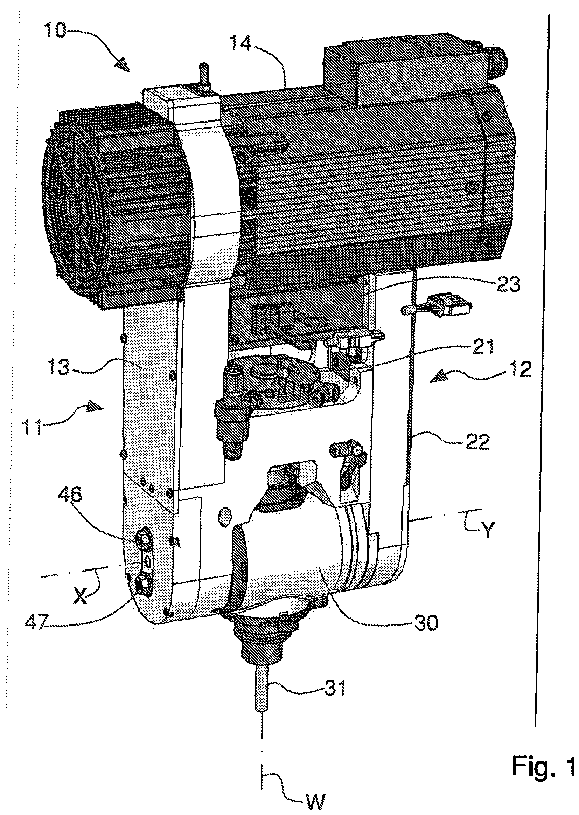

With reference to Figures 1 to 4 there is shown a toolholder head 10 arranged for being slidably supported by a frame of a machine tool, which is not shown, for machining profiled sections, in particular aluminium profiled sections.

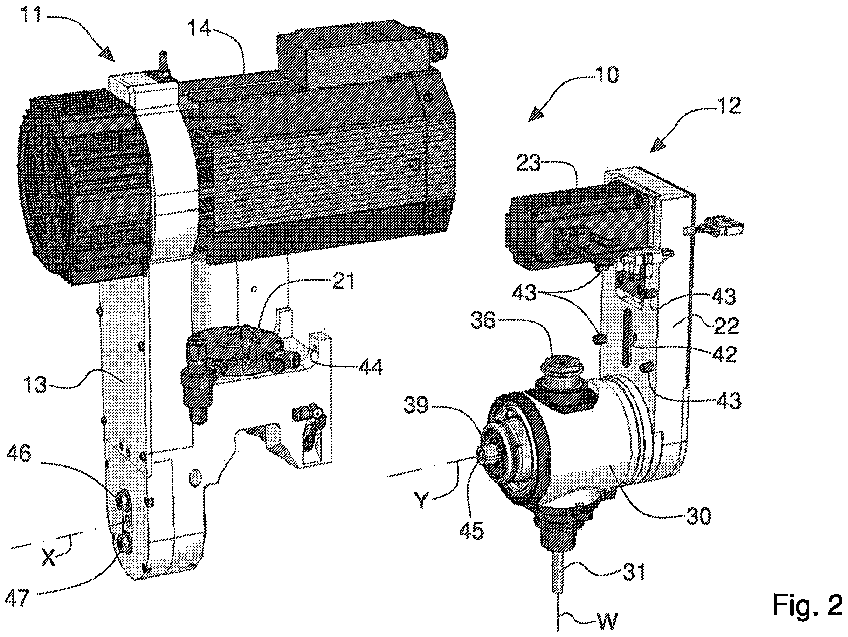

The toolholder head 10 comprises a driving unit 11 and a toolholder unit 12 (Figure 2).

The driving unit 11 comprises a first frame 13 supporting a first motor 14, for example an electric motor.

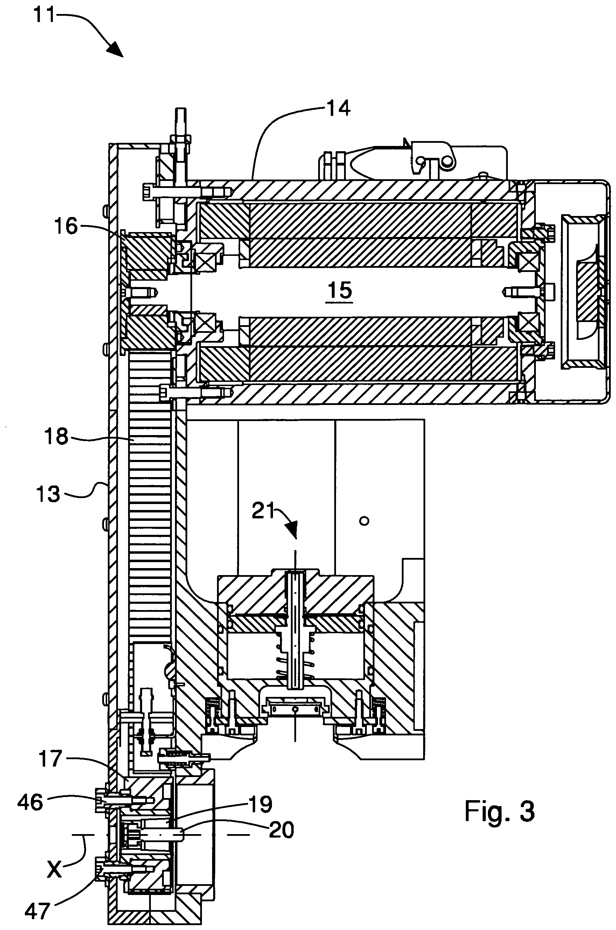

The first motor 14 comprises a first drive shaft 15 to an end of which a first drive pulley 16 is fixed, which is housed in the first frame 13 (Figure 3).

The first drive pulley 16 is connected by a first strap 18 to a first driven pulley 17, the first strap 18 and the first driven pulley 17 being housed in the first frame 13.

The first driven pulley 17 comprises a first seat 19 having a substantially frustum conical shape. Inside the first seat 19 there is further provided a screw 20 extending substantially parallel to a first rotation axis X of the first driven pulley 17.

The screw 20 serves to connect stably each other the driving unit 11 and the toolholder unit 12 and to act as an extracting element when the toolholder unit 12 is separated from the driving unit 11.

Two further screws 46 and 47 are further provided that are insertible into respective holes of the frame 13 of the driving unit 11 and intended for interacting with the driven pulley 17 to lock the driven pulley 17, such as to be able to connect the toolholder unit 12 to the driving unit 11 and separate the toolholder unit 12 from the driving unit 11 without the pull of the strap 18 being affected. This makes it unnecessary to have to check and possibly adjust the pull of the strap 18 each time that the toolholder unit 12 separates from the driving unit 11 or connects thereto. This makes the operations of separating/connecting the two units particularly rapid.

The driving unit 11 further comprises a pneumatic toolconnecting/disconnecting device 21, which is not disclosed in detail as it is of known type.

Also, the driving unit 11 comprises first lubricating conduits, which are not shown, for conveying a lubricant to a tool 31, for example a milling unit, and to rotating parts of the toolholder head 10.

The aforesaid toolholder unit 12 comprises a second frame 22 supporting a second motor 23, for example an electric motor (Figure 2).

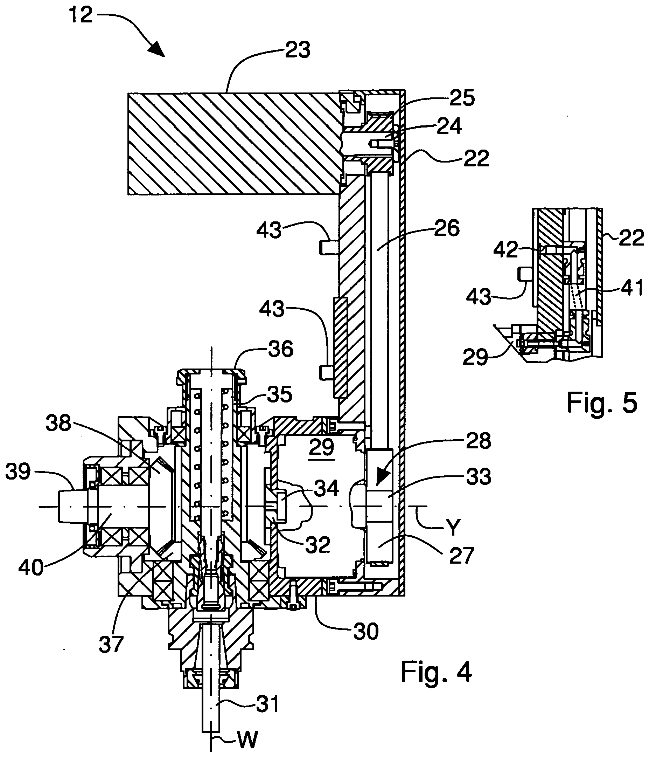

The second motor 23 comprises a second drive shaft 24 to an end of which a second drive pulley 25 is fixed, which is housed in the second frame 22 (Figure 4).

The second drive pulley 25 is connected by a second strap 26 to a second driven pulley 27, the second strap 26 and the second driven pulley 27 being housed in the second frame 22. A first driven shaft 28 is fixed to the second driven pulley 27 by a first end 33 thereof.

The first driven shaft 28 supports a lubricant rotating distributor 29, which is not disclosed in detail inasmuch as it is of known type.

The toolholder unit 12 further comprises a tool support 30 that is rotatably supported by the second frame 22.

The tool support 30 is arranged for rotatingly supporting the tool 31 around its own axis of rotation W.

Further, as will be disclosed better below, the tool support 30 is rotatable around a second axis Y by the second motor 23.

In particular, the second axis Y substantially coincides, when the toolholder head 10 is in the configuration in Figure 1, with the first axis X.

The tool support 30 is connected, via a flange 32, to a second end 34 of the first driven shaft 28.

Further, the tool support 30 supports a sleeve 35 rotatably. In particular, the sleeve 35 supports at one end the tool 31 and at a further end a shank 36 arranged for interacting with the pneumatic tool-disconnecting device 21.

A first gear 37 is fixed to the sleeve 35, the first gear 37 being arranged in use for rotating substantially parallel to the rotation axis W.

The first gear 37 engages a second gear 38, which is rotatably supported, substantially parallel to the second axis Y, by the tool support 30.

A second driven shaft 40 is fixed to the second gear 38.

At one end of the driven shaft 40 opposite the second gear 38 a first joint 39, having a substantially frustum conical shape, is provided that is arranged for coupling in a shapingly coupled manner with the first seat 19. The joint 39 is further provided with a threaded seat 45 (Figure 2), in which the screw 20 can engage to make stable and precise coupling between the driving unit 11 and the toolholder unit 12.

In use, the first joint 39, the first seat 19 and the screw 20 achieve a first quick joint connection between the driving unit 11 and the toolholder unit 12.

Further, the toolholder unit 12 comprises second lubricating conduits 41 to convey the lubricant to the tool 31, to the rotating parts of the toolholder head 10 and to the rotating distributor 29 (Figure 5).

The second lubricating conduits 41 are connected to a second seat 42 arranged for engaging with a corresponding second joint, which is not shown, which is connected to the aforesaid first lubricating conduits, such as to constitute an integrated lubricating system with the driving unit 11. In use, the second joint and the second seat 42 achieve a second quick joint connection between the driving unit 11 and the toolholder unit 12.

From the toolholder unit 12 further pins 43 further project that are arranged for being inserted into corresponding further seat elements 44 obtained in the driving unit 11 (Figure 2).

This enables the driving unit 11 to be coupled precisely with the toolholder unit 12.

The toolholder head 10 further comprises sensors, which are not shown, which are positioned in the driving unit 11 and are arranged for controlling the movements of the tool support 30 around the second axis Y, said sensors being able to be associated with a numeric control device for managing the angle of tilt of the tool (31) around the axis Y.

In use, the first motor 14 rotates the first drive pulley 16, which rotates the first driven pulley 17 by means of the first strap 18.

The first driven pulley 17, which is removably connected to the second driven shaft 40 by the quick joint achieved by the first seat 19, by the screw 20 and by the first joint 39, rotates the second driven shaft 40.

The second driven shaft 40 in turn rotates the tool 31 by the second gear 38 and the first gear 37.

Further, in use, it is possible to rotate the tool support 30 around the second axis Y.

To do so, it is sufficient to drive the second motor 23, which rotates the second drive pulley 25.

The latter rotates, by means of the second strap 26, the second driven pulley 27.

The second driven pulley 27, by means of the first driven shaft 28, rotates the tool support 30.

It should be noted that the toolholder head 10 is more flexible than known toolholder heads.

In fact, the first joint 39-first seat 19 and second jointsecond seat 42 pairs enable the driving unit 11 to be connected to/disconnected from the toolholder unit 12, without removing the pulley 17. Further, the screws 46 and 47 enable the driving unit 11 to be connected to/disconnected from the toolholder unit 12, without affecting the pull of the strap 18.

This enables the toolholder unit 12 to be replaced rapidly in the event of breakage or if it is desired to replace the toolholder unit 12 with another toolholder unit provided with a different tool support.

This further enables machine downtimes to be reduced if it is necessary to replace the toolholder unit.

In fact, in this case, it is no longer necessary to remove the entire toolholder head 10 from the machine tool but it is sufficient to replace the toolholder unit 12.

It should also be noted that the first motor 14, the first drive pulley 16, the first driven pulley 17 and the first strap 18 of the driving unit 11, are arranged such as to minimise the overall dimensions of the driving unit 11 with respect to the tool 31 and to the tool support 30.

In one embodiment of the invention, which is not shown, the first seat 19 and the first joint 39 may have any shape provided that they achieve a shapingly coupling.

In a further embodiment of the invention, which is not shown, it is possible to use any type of quick joint in place of the first seat 19-first joint 39 and second seat 42-second joint pairs.

Variations on and/or additions to what has been disclosed above and/or shown in the attached drawings are also possible, without departing from the scope of the claims.

## Claims

1. Toolholder head (10) for a machine tool for machining elongated elements, comprising a toolholder unit (12) for supporting a tool (31) in such a way that it can be rotated around a first axis (W) and be tilted around a second axis (Y) that is orthogonal with respect to said first axis (W) and a driving unit (11) comprising a first motor (14) for rotating said tool (31) around said first axis of rotation (W), said toolholder unit (12) being provided with a second motor (23) and with motion transmission members (25, 26, 28) that are suitable for tilting said tool (31) around said second axis (Y), **characterised in that** quick joint connecting means (19, 20, 39, 42) is provided for removably connecting said toolholder unit (12) to said driving unit (11).

2. Toolholder head (10) according to claim 1, wherein said quick joint connecting means (19, 20, 39, 42) comprises first quick joint connecting means (19, 20, 39) for removably connecting first motion transmission means (16, 17, 18) included in said driving unit (11) to second motion transmission means (37, 38, 40) included in said toolholder unit (12), said first motion transmission means (16, 17, 18) and said second motion transmission means (37, 38, 40) being arranged for transmitting the motion from said first motor (14) of said driving unit (11) to said tool (31).

3. Toolholder head (10) according to claim 2, wherein said first quick joint connecting means (19, 20, 39) comprises a first coupling element (19) associated with said driving unit (11) and a further first coupling element (39) associated with said toolholder unit (12), said first coupling element (19) and said further first coupling element (39) being couplable in a shapingly coupled manner..

4. Toolholder head (10) according to claim 3, wherein said first coupling element (19) comprises a first seat (19) and said further first coupling element comprises a first joint element (39) that is insertible into said first seat (19), said first seat (19) and said first joint element (39) having a substantially frustum conical shape.

5. Toolholder head (10) according to claim 4, wherein said first seat (19) is obtained in a pulley element (17), of said first motion transmission means (16, 17, 18), connected to said motor (14), and said first joint element (39) is associated with a shaft element (40), of said second motion transmission means (37, 38, 40), connected to said tool (31).

6. Toolholder head (10) according to any preceding claim, wherein said quick joint connecting means (19, 20, 39, 42) comprises second quick joint connecting means (42) to connect removably first lubricating means included in said driving unit (11) to second lubricating means (41) included in said toolholder unit (12), such as to constitute a lubricating system integrated with said first lubricating means (41), said first lubricating means and said second lubricating means (41) cooperating to convey a lubricating means to said tool (31) and to rotating parts of said toolholder head (10) .

7. Toolholder head (10) according to claim 6, wherein said second quick joint connecting means comprises a second seat (42) and a second joint element that is insertible into said second seat (42), said second seat (42) being obtained in said toolholder unit (12) and said second joint element being associated with said driving unit (11) .

8. Toolholder head (10) according to any one of claims 4to 7, wherein said first quick joint connecting means (19, 20, 39) comprises a screw element (20) associated with said first seat (19) and suitable for being coupled with a threaded seat (45) provided in said first joint element (39).

9. Toolholder head (10) according to any one of claims 5 to 8, further comprising locking elements (46, 47) suitable for interacting with said pulley element (17) to lock said pulley element (17), said locking elements comprising screw elements (46, 47).

10. Toolholder head (10), according to any preceding claim, and further comprising reference means (43, 44) for coupling said driving unit (11) precisely with said toolholder unit (12).

11. Toolholder head (10) according to claim 10, wherein said reference means (43, 44) comprises at least one further seat element (44) and at least a further pin element (43) that is insertible into said at least one further seat element (44), said at least one further seat element (44) being obtained in said driving unit (11) and said at least a further pin element (43) being associated with said toolholder unit (12).

12. Toolholder head (10) according to any preceding claim, wherein said toolholder unit is provided with disconnecting means (36) suitable for interacting with a connecting/disconnecting device (21) of said tool (31) provided in said driving unit (11).

13. Toolholder head (10) according to any preceding claim, further comprising sensors positioned in said driving unit (11) and arranged for controlling the movements of said tool (31) around said second axis (Y), said sensors being associable with a numeric control device that is suitable for managing a tilt angle of the tool (31) around the second axis (Y).

## Patentansprüche

1. Werkzeughaltekopf (10) für eine Werkzeugmaschine zur Bearbeitung von länglichen Elementen, mit einer Werkzeughalteeinheit (12) zur Aufnahme eines Werkzeugs (31) in einer solchen Weise, dass es um eine erste Achse (W) gedreht werden kann und um eine zweite Achse (Y), die orthogonal zur ersten Achse (W) ist, gekippt werden kann, und einer Antriebseinheit (11) mit einem ersten Motor (14) zum Drehen des Werkzeugs (31) um die erste Drehachse (W), wobei die Werkzeughalteeinheit (12) mit einem zweiten Motor (23) und mit Bewegungsübertragungsorganen (25, 26, 28) ausgestattet ist, die zum Kippen des Werkzeugs (31) um die zweite Achse (Y) geeignet sind, **dadurch gekennzeichnet, dass** Schnellverschlussverbindungsmittel (19, 20, 39, 42) zum lösbaren Verbinden der Werkzeughalteeinheit (12) mit der Antriebseinheit (11) vorgesehen sind.

2. Werkzeughaltekopf (10) nach Anspruch 1, wobei die Schnellverschlussverbindungsmittel (19, 20, 39, 42) erste Schnellverschlussverbindungsmittel (19, 30, 39) zum lösbaren Verbinden von ersten in der Antriebseinheit (11) enthaltenen Bewegungsübertragungsmitteln (16, 17, 18) mit zweiten in der Werkzeughalteeinheit (12) enthaltenen Bewegungsübertragungsmitteln (37, 38, 40) aufweisen, wobei die ersten Bewegungsübertragungsmittel (16, 17, 18) und die zweiten Bewegungsübertragungsmittel (37, 38, 40) zum Übertragen der Bewegung des ersten Motors (14) der Antriebseinheit (11) zum Werkzeug (31) angeordnet sind.

3. Werkzeughaltekopf (10) nach Anspruch 2, wobei die ersten Schnellverschlussverbindungsmittel (19, 20, 39) ein erstes Kupplungselement (19), das der Antriebseinheit (11) zugeordnet ist, und ein weiteres erstes Kupplungselement (39) aufweisen, das der Werkzeughalteeinheit (12) zugeordnet ist, wobei das erste Kupplungselement (19) und das weitere erste Kupplungselement (39) formgekoppelt koppelbar sind.

4. Werkzeughaltekopf (10) nach Anspruch 3, wobei das erste Kupplungselement (19) einen ersten Sitz (19) aufweist und das weitere erste Kupplungselement ein erstes Verbindungselement (39) aufweist, das in den ersten Sitz (19) einsetzbar ist, wobei der erste Sitz (19) und das erste Verbindungselement (39) eine im Wesentlichen kegelstumpfförmige Form aufweisen.

5. Werkzeughaltekopf (10) nach Anspruch 4, wobei der erste Sitz (19) in einem Rollenelement (17) der ersten Bewegungsübertragungsmittel (16, 17, 18) enthalten ist, das mit dem Motor (14) verbunden ist, und das erste Verbindungselement (39) einem Schaftelement (40) der zweiten Bewegungsübertragungsmittel (37, 38, 40) zugeordnet ist, das mit dem Werkzeug (31) verbunden ist.

6. Werkzeughaltekopf (10) nach einem der vorhergehenden Ansprüche, wobei die Schnellverschlussverbindungsmittel (19, 20, 39, 42) zweite Schnellverschlussverbindungsmittel (42) aufweisen, um erste Schmiermittel, die in der Antriebseinheit (11) enthalten sind, mit zweiten Schmiermitteln (41), die in der Werkzeughalteeinheit (12) enthalten sind, lösbar zu verbinden, um so ein Schmiersystem zu bilden, das in die ersten Schmiermittel (41) integriert ist, wobei die ersten Schmiermittel und die zweiten Schmiermittel (41) zusammenwirken, um Schmiermittel zu dem Werkzeug (31) und zu den sich drehenden Teilen des Werkzeughaltekopfs (10) zu befördern.

7. Werkzeughaltekopf (10) nach Anspruch 6, wobei die zweiten Schnellverschlussverbindungsmittel einen zweiten Sitz (42) und ein zweites Verbindungselement aufweisen, das in den zweiten Sitz (42) einsetzbar ist, wobei der zweite Sitz (42) in der Werkzeughalteeinheit (12) enthalten ist und das zweite Verbindungselement der Antriebseinheit (11) zugeordnet ist.

8. Werkzeughaltekopf (10) nach einem der Ansprüche 4 bis 7, wobei die ersten Schnellverschlussverbindungsmittel (19, 20, 39) ein Schraubelement (20) aufweisen, das dem ersten Sitz (19) zugeordnet ist und zum Koppeln mit einem in dem ersten Verbindungselement (39) vorgesehenen Gewindesitz (45) geeignet ist.

9. Werkzeughaltekopf (10) nach einem der Ansprüche 5 bis 8, weiterhin mit Verriegelungselementen (46, 47), die dazu geeignet sind, mit dem Rollenelement (17) wechselzuwirken, um das Rollenelement (17) zu verriegeln, wobei die Verriegelungselemente Schraubelemente (46, 47) aufweisen.

10. Werkzeughaltekopf (10) nach einem der vorhergehenden Ansprüche, und weiterhin mit Referenziermitteln (43, 44) zum genauen Koppeln der Antriebseinheit (11) mit der Werkzeughalteeinheit (12).

11. Werkzeughaltekopf (10) nach Anspruch 10, wobei die Referenziermittel (43, 44) zumindest ein weiteres Sitzelement (44) und zumindest ein weiteres Stiftelement (43) aufweisen, das in das zumindest eine weitere Sitzelement (44) einsetzbar ist, wobei das zumindest eine weitere Sitzelement (44) in der Antriebseinheit (11) enthalten ist, und das zumindest eine weitere Stiftelement (43) der Werkzeughalteeinheit (12) zugeordnet ist.

12. Werkzeughaltekopf (10) nach einem der vorhergehenden Ansprüche, wobei die Werkzeughalteeinheit mit Trennmitteln (36) versehen ist, die dazu geeignet sind, mit einer Verbindungs-/Trennvorrichtung (21) des Werkzeugs (31), die in der Antriebseinheit (11) vorgesehen ist, wechselzuwirken.

13. Werkzeughaltekopf (10) nach einem der vorhergehenden Ansprüche, weiterhin mit Sensoren, die in der Antriebseinheit (11) positioniert und zum Steuern der Bewegungen des Werkzeugs (31) um die zweite Achse (Y) angeordnet sind, wobei die Sensoren einer numerischen Steuervorrichtung zugeordnet sind, die dazu geeignet ist, einen Kippwinkel des Werkzeugs (31) um die zweite Achse (Y) zu führen.

## Revendications

1. Tête porte-outil (10) pour une machine-outil destinée à usiner des éléments allongés, comprenant une unité porte-outil (12) destinée à supporter un outil (31) de telle façon qu'il puisse être entraîné en rotation autour d'un premier axe (W) et qu'il puisse être incliné autour d'un deuxième axe (Y) qui est orthogonal audit premier axe (W), et une unité d'entraînement (11) comprenant un premier moteur (14) pour entraîner en rotation ledit outil (31) autour dudit premier axe de rotation (W), ladite unité porte-outil (12) étant pourvue d'un deuxième moteur (23) et d'éléments (25, 26, 28) de transmission de mouvement qui sont aptes à incliner ledit outil (31) autour dudit deuxième axe (Y), ***caractérisé en ce que*** des moyens (19, 20, 39, 42) de raccord rapide sont prévus pour raccorder de manière amovible ladite unité porte-outil (12) à ladite unité d'entraînement (11).

2. Tête porte-outil (10) selon la revendication 1, dans laquelle lesdits moyens (19, 20, 39, 42) de raccord rapide comprennent des premier moyens (19, 20, 39) de raccord rapide pour raccorder de manière amovible des premiers moyens (16, 17, 18) de transmission de mouvement inclus dans ladite unité d'entraînement (11) à des deuxièmes moyens (37, 38, 40) de transmission de mouvement inclus dans ladite unité porte-outil (12), lesdits premiers moyens (16, 17, 18) de transmission de mouvement et lesdits deuxièmes moyens (37, 38, 40) de transmission de mouvement étant agencés pour transmettre le mouvement dudit premier moteur (14) de ladite unité d'entraînement (11) audit outil (31).

3. Tête porte-outil (10) selon la revendication 2, dans laquelle lesdits premier moyens (19, 20, 39) de raccord rapide comprennent un premier élément d'accouplement (19) associé à ladite unité d'entraînement (11) et un premier élément d'accouplement supplémentaire (39) associé à ladite unité porte-outil (12), ledit premier élément d'accouplement (19) et ledit premier élément d'accouplement supplémentaire (39) pouvant être accouplés par accouplement de formes.

4. Tête porte-outil (10) selon la revendication 3, dans laquelle ledit premier élément d'accouplement (19) comprend un premier siège (19) et ledit premier élément d'accouplement supplémentaire comprend un premier élément de liaison (39) qui peut être inséré dans ledit premier siège (19), ledit premier siège (19) et ledit premier élément d'assemblage (39) ayant une forme sensiblement tronconique.

5. Tête porte-outil (10) selon la revendication 4, dans laquelle ledit premier siège (19) est ménagé dans un élément de poulie (17) desdits premiers moyens (16, 17, 18) de transmission de mouvement, raccordé audit moteur (14), et ledit premier élément de liaison (39) est associé à un élément d'arbre (40) desdits deuxièmes moyens (37, 38, 40) de transmission de mouvement, raccordé audit outil (31).

6. Tête porte-outil (10) selon l'une quelconque des revendications précédentes, dans laquelle lesdits moyens de raccord rapide (19, 20, 39, 42) comprennent des deuxièmes moyens de raccord rapide (42) pour raccorder de manière amovible des premiers moyens de lubrification inclus dans ladite unité d'entraînement (11), à des deuxièmes moyens de lubrification (41) inclus dans ladite unité porte-outil (12), de manière à constituer un système de lubrification intégré auxdits premiers moyens de lubrification, lesdits premiers moyens de lubrification et lesdits deuxièmes moyens de lubrification (41) coopérant pour acheminer un moyen de lubrification audit outil (31) et à des parties en rotation de ladite tête porte-outil (10).

7. Tête porte-outil (10) selon la revendication 6, dans laquelle lesdits deuxièmes moyens de raccord rapide comprennent un deuxième siège (42) et un deuxième élément de liaison qui peut être inséré dans ledit deuxième siège (42), ledit deuxième siège (42) étant ménagé dans ladite unité porte-outil (12) et ledit deuxième élément de liaison étant associé à ladite unité d'entraînement (11).

8. Tête porte-outil (10) selon l'une quelconque des revendications 4 à 7, dans laquelle lesdits premiers moyens (19, 20, 39) de raccord rapide comprennent un élément de vis (20) associé audit premier siège (19) et apte à être couplé à un siège fileté (45) ménagé dans ledit premier élément de liaison (39).

9. Tête porte-outil (10) selon l'une quelconque des revendications 5 à 8, comprenant en outre des éléments de verrouillage (46, 47) aptes à interagir avec ledit élément de poulie (17) pour bloquer ledit élément de poulie (17), lesdits éléments de verrouillage comprenant des éléments de vis (46, 47).

10. Tête porte-outil (10) selon l'une quelconque des revendications précédentes, et comprenant en outre des moyens de repère (43, 44) pour accoupler de manière précise ladite unité d'entraînement (11) avec ladite unité porte-outil (12).

11. Tête porte-outil (10) selon la revendication 10, dans laquelle lesdits moyens de repère (43, 44) comprennent au moins un autre élément de siège (44) et au moins un autre élément de broche (43) qui peut être inséré dans ledit au moins un autre élément de siège (44) ménagé dans ladite unité d'entraînement (11) et ledit au moins un autre élément de broche (43) étant associé à ladite unité porte-outil (12).

12. Tête porte-outil (10) selon l'une quelconque des revendications précédentes, dans laquelle ladite unité porte-outil est pourvue de moyens de déconnexion (36) aptes à interagir avec un dispositif de connexion/déconnexion (21) dudit outil (31) prévu dans ladite unité d'entraînement (11).

13. Tête porte-outil (10) selon l'une quelconque des revendications précédentes, comprenant en outre des capteurs positionnés dans ladite unité d'entraînement (11) et agencés pour contrôler les mouvements dudit outil (31) autour dudit deuxième axe (Y), lesdits capteurs étant associables à un dispositif de commande numérique qui est apte à gérer un angle d'inclinaison de l'outil (31) autour du deuxième axe (Y).
